# EUROPEAN PATENT APPLICATION

(11) **EP 4 757 320 A1**
(43) Date of publication of application: **10.06.2026**
(21) Application number: 24848322.4
(22) Date of filing: 31.07.2024
(51) Int. Cl.: H04N 21/234

(54) **VIDEO EXPORTING METHOD AND DEVICE, AND STORAGE MEDIUM**

(30) Priority: 31.07.2023 CN 202310956389
(71) Applicant: Beijing Zitiao Network Technology Co., Ltd., Beijing 100190 (CN)
(72) Inventor: QIU, Kailu, Beijing 100028 (CN); YU, Jifei, Beijing 100028 (CN); DENG, Wenyao, Beijing 100028 (CN)
(74) Representative: Isarpatent
(86) International application number: PCT/CN2024/108950
(87) International publication number: WO 2025/026367

(57) **Abstract**

Embodiments of the present disclosure provide a video exporting method and device, and a storage medium. A video editing draft is exported according to a historical export parameter to generate a first video in response to an instruction for jumping to an export interface of the video editing draft; a current export parameter in the export page is obtained in response to a trigger instruction for an export control in the export interface; and if a target export parameter in the current export parameter is consistent with a target export parameter in the historical export parameter, the first video is used as a target video exported from the video editing draft. The export of the video editing draft is started in advance when the export page is opened, an idle time of the user on the export interface is fully utilized, a time for the user to wait for the export is shortened, and the user experience of the export process is improved.

## Description

This application claims priority to Chinese Patent Application No. 202310956389.6, entitled "Video Exporting method and Device, and Storage Medium", filed July 31, 2023, the entirety of which is incorporated herein by reference.

### FIELD

Embodiments of the disclosure relate to the field of computer and network communication technologies, and in particular, to a video exporting method, a video exporting device, and a storage medium.

### BACKGROUND

With the development of network technologies and the improvement of hardware performance of terminal devices, the demands for video creation and video editing on the terminal devices are growing rapidly.

However, in the prior art, the process of video editing on the terminal device, especially the process of video encoding and exporting is time-consuming. It is a long time for the user to wait for video exporting, and the user experience is seriously affected.

### SUMMARY

The embodiment of the invention provides a video exporting method, a video exporting device and a storage medium, so as to shorten a time for the user to wait for video exporting.

In a first aspect, an embodiment of the disclosure provides a video exporting method, including: exporting a video editing draft according to a historical export parameter to generate a first video in response to an instruction for jumping to an export interface of the video editing draft; obtaining a current export parameter in the export page in response to a trigger instruction for an export control in the export interface; and using the first video as a target video exported from the video editing draft if a target export parameter in the current export parameter is consistent with a target export parameter in the historical export parameter.

In a second aspect, an embodiment of the disclosure provides a video exporting device, including: a pre-exporting unit, configured to export a video editing draft according to a historical export parameter to generate a first video in response to an instruction for jumping to an export interface of the video editing draft; a determining unit, configured to obtain a current export parameter in the export page in response to a trigger instruction for an export control in the export interface; a reusing unit, configured to use the first video as a target video exported from the video editing draft if a target export parameter in the current export parameter is consistent with a target export parameter in the historical export parameter.

In a third aspect, an embodiment of the disclosure provides an electronic device, including: at least one processor and a memory; the memory storing computer-executable instructions; and the at least one processor executing the computer-executable instructions stored in the memory, causing the at least one processor to perform the video exporting method according to the first aspect and various possible designs of the first aspect.

In a fourth aspect, an embodiment of the disclosure provides a computer-readable storage medium having stored thereon computer-executable instructions that, when executed by a processor, implement the video exporting method according to the first aspect and various possible designs of the first aspect.

In a fifth aspect, an embodiment of the disclosure provides a computer program product, including computer-executable instructions that, when executed by a processor, implements the video exporting method according to the first aspect and various possible designs of the first aspect.

### BRIEF DESCRIPTION OF DRAWINGS

In order to more clearly illustrate the embodiments of the disclosure or the technical solutions in the prior art, the accompanying drawings used in the description of the embodiments or the prior art will be briefly introduced below, and it will be apparent that the drawings in the following description are some embodiments of the disclosure, and those skilled in the art may also obtain other drawings according to these drawings without creative efforts.
FIG. 1 is an example diagram of a scene of a video exporting method according to an embodiment of the disclosure;
FIG. 2 is a schematic flowchart of a video exporting method according to an embodiment of the disclosure;
FIG. 3 is a schematic flowchart of a video exporting method according to another embodiment of the disclosure;
FIG. 4 is a schematic diagram of a video editing draft provided by an embodiment of the disclosure;
FIG. 5 is a structural block diagram of a video exporting device according to an embodiment of the disclosure; and
FIG. 6 is a schematic diagram of a hardware structure of an electronic device according to an embodiment of the disclosure.

### DETAILED DESCRIPTION

In order to make the objectives, technical solutions and advantages of the embodiments of the disclosure clearer, the technical solutions in the embodiments of the disclosure will be clearly and completely described below with reference to the accompanying drawings in the embodiments of the disclosure. Obviously, the described embodiments are part of the embodiments of the disclosure, but not all of the embodiments. All other embodiments obtained by those skilled in the art based on the embodiments of the disclosure without creative efforts shall fall within the scope of the disclosure.

In the prior art, the process of video editing on a terminal device, especially the process of video encoding and exporting is time-consuming, it is a long time for the user to wait for video exporting, and the user experience is seriously affected.

In order to solve the above technical problem, in the disclosure, it is considered that the user usually needs to enter an export interface of a video editing draft when the user needs to export the video editing draft. Export parameters are set in the export interface, including but not limited to a video file name, an export path, a resolution, a code rate, an encoding format, a video container format (e.g., a file encapsulation format), and the like. The user generally stays on the export interface for a period of time. For most users, most of the export parameters in the export interface are generally not frequently modified. The user has a certain usage habit for most export parameters, and even if an export parameter is modified, the modified export parameter may not affect an export product. For example, a video file name, an export path, or the like, will not affect encoding of a video. Therefore, this idle time may be fully utilized to start the export of the video editing draft in advance in the background according to a historical export parameter. That is, when the user opens the export interface of the video editing draft, a pre-export process may be started for the video editing draft according to the historical export parameter in response to an opening instruction for the export interface. Since the pre-export process is run in the background and is imperceptible to the user, the user may continue to modify one or more export parameters in the export interface. In this way, when the user triggers the export control in the export interface, the pre-export process may be reused, and a time for the user to wait for the export is shortened, so that it makes the user feel that the export speed has increased, and the user experience of the export process is improved.

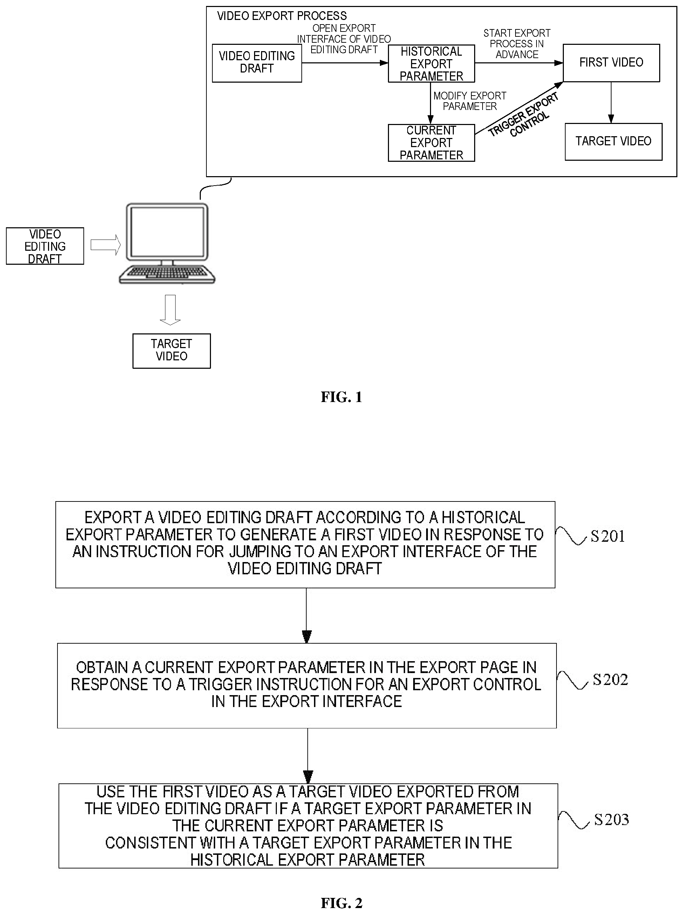

The video exporting method provided by the disclosure may be applied to an electronic device such as a terminal device or a server. As shown in FIG. 1, the terminal device is taken as an example, the user opens the export interface of the video editing draft.

It should be noted that the user information (including but not limited to user device information, user personal information, etc.) and data (including but not limited to data for analysis, stored data, displayed data, etc.) involved in this application are information and data that are authorized by the user or are sufficiently authorized by various parties, and collection, usage and processing of the related data needs to comply with relevant laws and regulations and standards of related countries and regions, and a corresponding operation entry is provided for the user to select authorization or refusal.

The video exporting method of the disclosure will be described in detail below with reference to specific embodiments.

Referring to FIG. 2, FIG. 2 is a schematic flowchart of a video exporting method according to an embodiment of the disclosure. The method in this embodiment may be applied to an electronic device such as a terminal device or a server, and the video exporting method includes:

S201, exporting a video editing draft according to a historical export parameter to generate a first video in response to an instruction for jumping to an export interface of the video editing draft.

In this embodiment, in some video editing scenarios (such as a video editing application), the video editing draft includes one or more multimedia materials such as (one or more) original video material, a picture material, an audio material, and the like, and editing information for the multimedia material, and a process of exporting the video encoding draft is a video encoding process, that is, synthesizing the multimedia materials into a video. When the video editing draft needs to be exported, it is usually necessary to enter the export interface of the video editing draft, and set export parameters in the export interface, including but not limited to a video file name, an export path, a resolution, a code rate, an encoding format, a video container format (e.g., a file encapsulation format), and the like. The user generally stays on the export interface for a period of time. For most users, most of the export parameters in the export interface are generally not frequently modified. Even if an export parameter is modified, the modified export parameter such as a video file name, an export path, or the like, may not affect an exported product. Therefore, in this embodiment, this idle time may be fully utilized to start the export of the video editing draft in advance in the background according to a historical export parameter. That is, when the user opens the export interface of the video editing draft, in response to an instruction for jumping to the export interface of the video editing draft, the export process may be started for the video editing draft according to the historical export parameter to generate the first video corresponding to the video editing draft. The export process is run in the background and is imperceptible to the user, and the user may continue to modify one or more export parameters in the export interface.

Optionally, the export interface may store the historical export parameter from the last export, and thus the export process may be started for the video editing draft based on the historical export parameter from the last export in the export interface.

S202: In response to a trigger instruction for an export control in the export interface, a current export parameter in the export page is obtained.

In this embodiment, the user may modify one or more export parameters in the export interface, and trigger the export control (for example, an export button) in the export interface after the modification is completed, and in response to the trigger instruction for the export control, the current export parameter in the export page may be obtained.

S203: If a target export parameter in the current export parameter is consistent with a target export parameter in the historical export parameter, the first video is used as a target video exported from the video editing draft.

In this embodiment, after obtaining the current export parameter in the export page, comparison between the current export parameter and the historical export parameter may be performed. Considering that modifying some parameters among the export parameters may affect the export product and modifying some parameters may not affect the export product, it may be possible to compare whether the target export parameter in the current export parameter is consistent with the target export parameter in the historical export parameter when comparing the current export parameter and the historical export parameter. The target export parameter is an export parameter that affects an export result, including but not limited to a resolution, a code rate, an encoding format, or the like. Optionally, modifying the video container format (e.g., the file encapsulation format) may have an impact on the export result, or certainly may not affect the export result. In a scenario in which modifying the video container format (e.g., the file encapsulation format) affects the export result, the target export parameter includes the video container format (e.g., the file encapsulation format). In a scenario in which modifying the video container format (e.g., the file encapsulation format) does not affect the export result, the target export parameter does not include the video container format (e.g., the file encapsulation format). Modifying the export parameters such as the video file name and the export path do not affect the export result, and therefore these export parameters are not used as the target export parameter and may not be compared.

If it is determined that the target export parameter in the current export parameter is consistent with the target export parameter in the historical export parameter, it is indicated that the target export parameter is not modified, and will not affect the export result, that is, the first video exported from the video editing draft according to the historical export parameter is consistent with a second video exported from the video editing draft according to the current export parameter. Therefore, the final first video may be directly adopted as the target video exported by the video editing draft, and it is not necessary to export the video editing draft from the beginning when the export control is triggered, the idle time of the user on the export interface is fully utilized, the time for the user to wait for exporting is shortened, and the user experience of the export process is improved.

Optionally, when the trigger instruction for the export control in the export interface is received, the export process of the first video may be in progress (i.e., being running), or may have already been completed, or certainly may have failed, or may be in other situations. Therefore, in this embodiment, when the trigger instruction for the export control in the export interface is received, a state of the export process of the first video may be detected.

Further, in S203, using the first video as the target video exported from the video editing draft may specifically include: continuing running of an export process of the first video and displaying export progress information if the export process of the first video is in progress, until the running of the export process of the first video is ended, and using the first video as the target video exported from the video editing draft.

In this embodiment, when the trigger instruction for the export control in the export interface is received, if the export process of the first video is in progress, the normal export process does not need to be started again, but the export process of the first video continues to be run, and the export process of the first video is reused with displaying export progress information, which is a progress information of the export process of the first video, until running of the export process of the first video is ended. The first video obtained after the running of the export process of the first video has been ended is a video file based on the historical export parameter, and the video file is used as a target video exported from the video editing draft.

After the export process of the first video is started, the progress information of the export process of the first video may be recorded, and when the trigger instruction for the export control in the export interface is received, an export progress display interface is displayed, and the progress information of the export process of the first video is displayed in the export progress display interface.

In another case, when the trigger instruction for the export control in the export interface is received, running of the export process of the first video is ended, prompt information indicating a completion of export is directly displayed, for example, by displaying an export completion prompt interface, and the first video obtained after the running of the export process of the first video has been ended is directly used as the target video exported from the video editing draft, without starting the normal export process again.

If it is determined that the target export parameter in the current export parameter is inconsistent with the target export parameter in the historical export parameter, re-exporting of the video editing draft is started according to the current export parameter. If the pre-export process is in progress, the export process of the first video is ended and the first video is deleted; if running of the export process of the first video is ended, the first video is deleted directly.

According to the video exporting method provided in this embodiment, a video editing draft is exported according to a historical export parameter to generate a first video in response to an instruction for jumping to an export interface of the video editing draft; a current export parameter in the export page is obtained in response to a trigger instruction for an export control in the export interface; and if a target export parameter in the current export parameter is consistent with a target export parameter in the historical export parameter, the first video is used as a target video exported from the video editing draft. The export of the video editing draft is started in advance when the export page is opened, an idle time of the user on the export interface is fully utilized, a time for the user to wait for the export is shortened, and the user experience of the export process is improved.

Based on any of the foregoing embodiments, when in S201, exporting the video editing draft according to the historical export parameter, a target folder may be created in a corresponding storage space according to a historical export path in the historical export parameter, and then the export process of the first video is started for the video editing draft according to the historical export parameter. The first video in the export process is cached into the target folder. The target folder may be a non-hidden folder or a hidden folder. The hidden file folder may make the user imperceptible to the export process of the first video, and may also prevent the user from mistakenly deleting the target folder to cause failure of the export process of the first video.

Further, after running of the export process of the first video is ended, when the first video obtained after the running of the export process of the first video is ended is used as the target video exported from the video editing draft, and considering that the export path may be modified by the user in the export interface, the first video is moved from the target folder to a current export path in the current export parameter to serve as the target video exported from the video editing draft.

In addition, if the user also modifies other export parameters (not described above) that do not belong to the target export parameter in the export interface, the first video obtained after the running of the export process of the first video is ended may be adjusted according to the other export parameters. For example, if the user modifies the video file name in the export interface, a video file name of the first video is modified according to the modified video file name.

On the basis of any of the above embodiments, after S202, obtaining the current export parameter in the export page, the method may further include: directly re-exporting the video editing draft according to the current export parameter in response to detecting that the export process of the first video fails or the first video is deleted.

In this embodiment, after the export process of the first video is started, there may be situations where the export process fails, or a product of the export process of the first video is deleted. When the trigger instruction for the export control in the export interface is received, it may be detected whether the export process of the first video has failed, or whether the product of the export process of the first video has been deleted. If it is detected that the export process of the first video has not failed and the product of the export process of the first video has not been deleted, it may be further determined whether the target export parameter in the current export parameter in the export interface is consistent with the target export parameter in the historical export parameter; if it is detected that the export process of the first video has failed, or the first video has been deleted, the video editing draft may be directly exported according to the current export parameter. The generated first video may be deleted in a situation where the export process of the first video fails and the product of the export process of the first video is not deleted.

On the basis of any of the foregoing embodiments, after S202, obtaining the current export parameter in the export page, the method may further include: directly re-exporting the video editing draft according to the current export parameter in response to detecting that a current export path in the current export parameter and a path where the first video is located are not in one disk partition.

In this embodiment, although modifying the export path does not affect the export result, if the current export path in the current export parameter and the path where the first video is located are not in one disk partition, it may also take a longer time to move the first video across the partition after the running of the export process of the first video is ended. Therefore, after receiving the trigger instruction for the export control in the export interface, if it is detected that the current export path in the current export parameter and the path where the first video is located are not in one disk partition, the video editing draft is directly re-exported according to the current export parameter. Certainly, detecting whether the current export path in the current export parameter and the first video are in one disk partition may be performed after S202, obtaining the current export parameter in the export page.

On the basis of any of the foregoing embodiments, after the export process of the first video is started for the video editing draft, before receiving the trigger instruction for the export control in the export interface, the user may modify any target export parameter. It may waste some idle time if the export process is restarted for the video editing draft according to the current export parameter until the trigger instruction for the export control in the export interface is received. For example, if the user first modifies a certain target export parameter in the export interface, and then triggers the export control in the export interface after staying on the export interface for a long time, the idle time from modifying the target export parameter to trigger the export control in the export interface is wasted. Therefore, in this embodiment, after the export process of the first video is started for the video editing draft, before the trigger instruction for the export control in the export interface is received, if it is detected that any target export parameter in the export interface is modified, the export process of the first video is stopped, and the video editing draft is re-exported according to the historical export parameter and the modified target export parameter. That is, each time one target export parameter is detected to be modified, the export process of the first video is stopped and then the export process is restarted, thereby ensuring that the idle time is effectively utilized. More specifically, the target export parameter in the historical export parameter is replaced with the modified target export parameter to obtain the replaced export parameter, and the export process is restarted for the video editing draft based on the replaced export parameter.

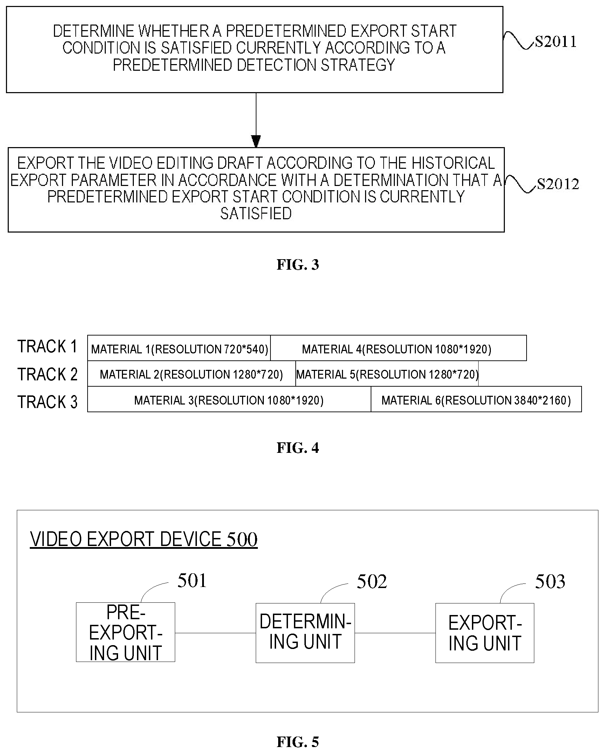

Based on any of the foregoing embodiments, as shown in FIG. 3, S201, exporting the video editing draft according to the historical export parameter further includes: S2011: determining whether a predetermined export start condition is satisfied currently according to a predetermined detection strategy; and S2012, exporting the video editing draft according to the historical export parameter in accordance with a determination that a predetermined export start condition is currently satisfied.

In this embodiment, it may be first determined whether a predetermined export start condition is satisfied before the pre-export process is started, and if it is determined that the predetermined export start condition is not currently satisfied, the pre-export process is not started. When the export control in the export interface is triggered, the normal export process is started for the video editing draft according to the current export parameter in the export interface in response to the trigger instruction for the export control; and if it is determined that the predetermined export start condition is currently satisfied, the pre-export process is started for the video editing draft according to the historical export parameter.

Optionally, when determining whether the predetermined export start condition is satisfied according to the predetermined detection strategy, the predetermined detection strategy may include one or more of the following detections.
1) Detection whether running of a target draft editing algorithm is ended. The target draft editing algorithm may include, but is not limited to, a frame interpolation algorithm, an anti-shake algorithm, an image matting algorithm, and the like. Whether the pre-export process or the normal export process, the export needs to wait and be performed until running of the algorithm is ended. If the target draft editing algorithm has not finished running when an opening instruction for the export interface of the video editing draft is received, the pre-export process may be temporarily not started, and the target draft editing algorithm is waited to finish running. If the trigger instruction for the export control in the export interface has not been received at this time, the pre-export process may be started, or the normal export process may be started for the video editing draft according to the current export parameter in the export interface after receiving the trigger instruction for the export control in the export interface.
2) Detection whether a processing capability of a current device satisfies a maximum load pressure of a pre-export process. This detection is performed to make the pre-export process imperceptible to the user as much as possible, and the normal editing experience of the user is not affected as much as possible. If the processing capability of the current device does not satisfy the maximum load pressure of the pre-export process, the predetermined export start condition is not satisfied.
   Optionally, a corresponding processing capability may be pre-configured for any device, and the processing capability may be a predetermined load pressure threshold of any device for the pre-export process. For example, for a model 1, the predetermined load pressure threshold is configured to be 3840 * 2160 (4K), and for a model 2, the predetermined load pressure threshold is configured to be 3840 * 2160 * 2 (8K). The configured predetermined load pressure threshold is related to a performance of a device hardware (for example, a GPU), and the higher the performance of the device hardware is, the higher the predetermined load pressure threshold is. For the maximum load pressure of the pre-export process of the video editing draft, the maximum resolution of each track in the video editing draft may be obtained, and the sum of the maximum resolutions of respective tracks is calculated, and the sum of the maximum resolutions of the respective tracks is determined as the maximum load pressure of the pre-export process. For example, the video editing draft shown in FIG. 4 includes 3 tracks, the maximum resolution of a track 1 is 1080 * 1920, the maximum resolution of a track 2 is 1280 * 720, the maximum resolution of a track 3 is 3840 * 2160, and the maximum load pressure is 1080 * 1920 + 1280 * 720 + 3840 * 2160; then the maximum load pressure of the pre-export process is compared with the predetermined load pressure threshold of the current device. If the maximum load pressure of the pre-export process exceeds the predetermined load pressure threshold, it is determined that the processing capability of the current device does not satisfy the maximum load pressure of the pre-export process. For example, if the current device is the model 1, and the corresponding predetermined load pressure threshold is 3840 * 2160 (4K), the maximum load pressure of the pre-export process of the video editing draft shown in FIG. 4 exceeds the predetermined load pressure threshold of the current device, and it is determined that the processing capability of the current device does not satisfy the maximum load pressure of the pre-export process, that is, the predetermined export start condition is not satisfied.
3) Detection whether a target path of a product of the pre-export process has an access permission. Since the product of the pre-export process in the foregoing embodiments may be cached in the storage space where the historical export path is located, or exported to any specified export path, it is denoted herein as the target path of the product of the pre-export process. If the target path of the product of the pre-export process does not have the access permission, the product obtained after the running of the pre-export process is ended cannot access or move, and the product obtained after the running of the pre-export process is ended cannot be used as the target video exported by the video editing draft. Therefore, it is necessary to detect whether the target path of the product of the pre-export process has the access permission before starting the pre-export process.
4) Detection whether a storage space of the target path of the product of the pre-export process satisfies a cache for the product of the pre-export process. Specifically, it may include determining whether the storage space of the target path of the product of the pre-export process is large enough, and whether the product of the pre-export process may be accommodated, and may also include determining whether the single maximum file size allowed by the storage space of the target path of the product of the pre-export process is sufficient to accommodate the product of the pre-export process. If the product of the pre-export process cannot be accommodated, the cache for the product of the pre-export process is not satisfied, that is, the predetermined export start condition is not satisfied.
5) Detection whether a material in the video editing draft is valid. For example, it is detected whether there are issues that prevent the material from being opened, such as whether the material is lost, whether the material has no access permission, whether the material is abnormal, and the like.
6) Detection whether a member material (e.g., a vip material) is used in the video editing draft and whether a current account is a member account (e.g., a vip account). If the current account of the member material is used in the video editing draft, and the current account is not the member account, the material is not available and the pre-export cannot be started. Optionally, the user may be prompted to subscribe to the member account or modify the material. If the current account is the member account, the predetermined export starting condition is satisfied.

On the basis of any of the foregoing embodiments, a state (e.g., a pre-export process state) of the export process of the first video may be managed, specifically as follows: 1) if the predetermined export start condition is not satisfied, a configuration state is that the pre-export process is unavailable; 2) if the pre-export process is started, the configuration state is that the pre-export process is in progress; 3) if the pre-export process fails midway, the configuration state is that the pre-export process fails; and 4) if running of the pre-export process is completed, the configuration state is that the pre-export process is successful.

The pre-export process state may be obtained upon receiving the trigger instruction for the export control in the export interface. If the state is that the pre-export process is unavailable or the pre-export process fails, the video editing draft is re-exported according to the current export parameter in the export interface; if the state is that the pre-export process is in progress, the export process of the first video continues to be run, and the export process of the first video is reused with displaying export progress information until running of the export process of the first video is ended, the first video is taken as the target video exported from the video editing draft; if the state is that the pre-export process is successful, prompt information indicating a completion of export is directly displayed, and the first video is directly used as the target video exported from the video editing draft.

On the basis of any of the above embodiments, this embodiment provides a video exporting method. The video exporting method includes the following steps.

At S401, an opening instruction for an export interface of a video editing draft is received.

At S402, it is determined whether a predetermined export start condition is satisfied currently according to a predetermined detection strategy.

If it is determined that the predetermined export start condition is not currently satisfied, an export process is not started, but after a trigger instruction for an export control in the export interface is received, the normal export process is started for the video editing draft according to a current export parameter in the export interface; otherwise, S403 is executed.

At S403, if it is determined that the predetermined export start condition is satisfied currently, the video editing draft is exported according to a historical export parameter to generate a first video.

At S404, an operation instruction for modifying an export parameter in the export interface is received from the user; this step is an optional step, i.e., the user may modify the export parameter, or may not modify the export parameter; regardless of whether the export parameter is modified, the export control in the export interface is triggered after the user confirms the current export parameter.

At S405, the trigger instruction for the export control in the export interface is received.

At S406, it is detected whether the export process of the first video fails, or whether the first video is deleted. If it is detected that the export process of the first video fails, or the first video is deleted, the video editing draft is directly re-exported according to the current export parameter in the export interface; otherwise, S407 is performed.

At S407, it is determined whether a target export parameter in the current export parameter in the export interface is consistent with a target export parameter in the historical export parameter. If it is determined that the target export parameter in the current export parameter is inconsistent with the target export parameter in the historical export parameter, the video editing draft is directly re-exported according to the current export parameter in the export interface, the export process of the first video is canceled, and the first video is deleted; otherwise, S408 is performed.

At S408, it is detected whether a current export path in the current export parameter and a path where the first video is located are in one disk partition. If it is determined that the current export path in the current export parameter and the path where the first video is located are not in one disk partition, the video editing draft is directly re-exported according to the current export parameter in the export interface, the export process of the first video is canceled, and the first video is deleted; otherwise, S409 is performed.

At S409, the first video is used as a target video exported from the video editing draft. Specifically, it may include: if the export process of the first video is in progress, continuing running of an export process of the first video and displaying export progress information, until the running of the export process of the first video is ended, and using the first video as the target video exported from the video editing draft; or if running of the export process of the first video has been ended, directly displaying prompt information indicating a completion of export, and using the first video as the target video exported from the video editing draft.

In addition, the method may further include: moving the first video from the path where the first video is located to the current export path in the current export parameter; and may further include other processes such as modification of a video file name of the first video according to a current video file name in the current export parameter.

Corresponding to the video exporting method in the foregoing embodiments, FIG. 5 is a structural block diagram of a video exporting device according to an embodiment of the disclosure. For ease of illustration, only portions related to embodiments of the disclosure are shown. Referring to FIG. 5, the video exporting device 500 includes: a pre-exporting unit 501, a determining unit 502, and an exporting unit 503.

The pre-exporting unit 501 is configured to export a video editing draft according to a historical export parameter to generate a first video in response to an instruction for jumping to an export interface of the video editing draft; a determining unit 502, configured to obtain a current export parameter in the export page in response to a trigger instruction for an export control in the export interface; and an exporting unit 503, configured to use the first video as a target video exported from the video editing draft if a target export parameter in the current export parameter being consistent with a target export parameter in the historical export parameter.

In one or more embodiments of the disclosure, when the first video is used as the target video exported from the video editing draft, the exporting unit 503 is configured to: continue running of an export process of the first video and display export progress information if the export process of the first video is in progress, until the running of the export process of the first video is ended, and use the first video as the target video exported from the video editing draft; or directly display prompt information indicating a completion of export if running of the export process of the first video is ended, and use the first video as the target video exported by the video editing draft.

In one or more embodiments of the disclosure, when displaying the export progress information, the exporting unit 503 is configured to: obtain progress information of the export process of the first video; and display an export progress display interface, and display the progress information of the export process of the first video in the export progress display interface.

In one or more embodiments of the disclosure, when exporting the video editing draft according to the historical export parameter, the pre-exporting unit 501 is configured to: create a target folder in a corresponding storage space according to a historical export path in the historical export parameter, and export the video editing draft into the target folder according to the historical export parameter; correspondingly, when the first video is used as the target video exported from the video editing draft, the reusing unit is configured to: move the first video from the target folder to a current export path in the current export parameter, and determine the first video as the target video exported from the video editing draft.

In one or more embodiments of the disclosure, the exporting unit 503 is further configured to: re-export the video editing draft according to the current export parameter in accordance with a determination that the target export parameter in the current export parameter is inconsistent with the target export parameter in the historical export parameter.

In one or more embodiments of the disclosure, after obtaining the current export parameter in the export page, the exporting unit 503 is further configured to: directly re-export the video editing draft according to the current export parameter in accordance with a determination that the export process of the first video fails or the first video is deleted.

In one or more embodiments of the disclosure, after obtaining the current export parameter in the export page, the exporting unit 503 is further configured to: directly re-export the video editing draft according to the current export parameter in accordance with a determination that a current export path in the current export parameter and a path where the first video is located are not in one disk partition.

In one or more embodiments of the disclosure, after exporting the video editing draft, and before receiving the trigger instruction for the export control in the export interface, the exporting unit 503 is further configured to: stop an export process of the first video in accordance with a determination that any target export parameter in the export interface is modified, and re-export the video editing draft according to the historical export parameter and the modified target export parameter.

In one or more embodiments of the disclosure, when exporting the video editing draft according to the historical export parameter, the pre-exporting unit 501 is configured to: determine whether a predetermined export start condition is satisfied currently according to a predetermined detection strategy; and export the video editing draft according to the historical export parameter in accordance with a determination that a predetermined export start condition is currently satisfied.

In one or more embodiments of the disclosure, when determining whether the predetermined export start condition is satisfied currently according to the predetermined detection strategy, the pre-exporting unit 501 performs at least one of the following: detecting whether running of a target draft edit algorithm is ended; or detecting whether a processing capability of a current device satisfies a maximum load pressure of a pre-export process; or detecting whether a target path of a product of the pre-export process has an access permission; or detecting whether a storage space of the target path of the product of the pre-export process satisfies a cache for the product of the pre-export process; or detecting whether a material in the video editing draft is valid; detecting whether a member material is used in the video editing draft and whether a current account is a member account.

In one or more embodiments of the disclosure, when detecting whether the processing capability of the current device satisfies the maximum load pressure of the pre-export process, the pre-exporting unit 501 is configured to: obtain maximum resolutions of respective track in the video editing draft, calculate a sum of the maximum resolutions of the respective tracks, and determine the sum of the maximum resolutions of the respective tracks as the maximum load pressure of the pre-export process; obtain a predetermined load pressure threshold of the current device for the pre-export process; and compare the maximum load pressure of the pre-export process with the predetermined load pressure threshold, and determine that the processing capability of the current device fails to satisfy the maximum load pressure of the pre-export process if the maximum load pressure of the pre-export process exceeds the predetermined load pressure threshold.

The video exporting device provided in this embodiment may be configured to perform the technical solutions in the foregoing method embodiments, and implementation principles and technical effects thereof are similar, and details are not described herein again in this embodiment.

According to a video exporting method, a video exporting device and a storage medium provided by the embodiments of the disclosure, a video editing draft is exported according to a historical export parameter to generate a first video in response to an instruction for jumping to an export interface of the video editing draft; a current export parameter in the export page is obtained in response to a trigger instruction for an export control in the export interface; and if a target export parameter in the current export parameter is consistent with a target export parameter in the historical export parameter, the first video is used as a target video exported from the video editing draft. The export of the video editing draft is started in advance when the export page is opened, an idle time of the user on the export interface is fully utilized, a time for the user to wait for the export is shortened, and the user experience of the export process is improved.

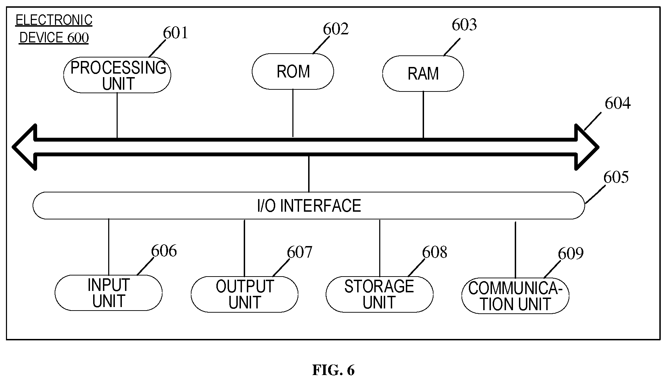

Referring to FIG. 6, FIG. 6 shows a schematic structural diagram of an electronic device 600 suitable for implementing embodiments of the disclosure, and the electronic device 600 may be a terminal device or a server. The terminal device may include, but is not limited to, a mobile terminal such as a mobile phone, a notebook computer, a digital broadcast receiver, a personal digital assistant (PDA), a tablet computer (PAD), a portable multimedia player (PMP), an in-vehicle terminal (for example, an in-vehicle navigation terminal), or the like, and a fixed terminal such as a digital TV, a desktop computer, or the like. The electronic device shown in FIG. 6 is merely an example, and should not be any limitation on the function and scope of usage of the embodiments of the disclosure.

As shown in FIG. 6, the electronic device 600 may include a processing unit (for example, a central processor, a graphics processor, etc.) 601, which may perform various appropriate actions and processing according to a program stored in a read only memory (ROM) 602 or a program loaded into a random access memory (RAM) 603 from a storage unit 608. In the RAM 603, various programs and data required by the operation of the electronic device 600 are also stored. The processing unit 601, the ROM 602, and the RAM 603 are connected to each other through a bus 604. An input / output (I / O) interface 605 is also connected to the bus 604.

Generally, the following units may be connected to the I / O interface 605: an input unit 606 including, for example, a touch screen, a touch pad, a keyboard, a mouse, a camera, a microphone, an accelerometer, a gyroscope, or the like; an output unit 607 including, for example, a liquid crystal display (LCD), a speaker, a vibrator, or the like; a storage unit 608 including, for example, a magnetic tape, a hard disk, or the like; and a communication unit 609. The communication unit 609 may allow the electronic device 600 to communicate wirelessly or wired with other devices to exchange data. While FIG. 6 shows the electronic device 600 having various units, it should be understood that it is not required to implement or have all illustrated units. More or fewer units may alternatively be implemented or provided.

In particular, according to an embodiment of the disclosure, the process described above with reference to the flowchart may be implemented as a computer software program. For example, the embodiment of the disclosure includes a computer program product including a computer program carried on a computer-readable medium, the computer program including program code for performing the method shown in the flowchart. In such embodiments, the computer program may be downloaded and installed from the network through the communication unit 609, or installed from the storage unit 608, or from the ROM 602. When the computer program is executed by the processing unit 601, the foregoing functions defined in the method of the embodiments of the disclosure are performed.

It should be noted that the computer-readable medium described above may be a computer-readable signal medium, a computer-readable storage medium, or any combination of the foregoing two. The computer-readable storage medium may be, for example, but not limited to, an electrical, magnetic, optical, electromagnetic, infrared, or semiconductor system, apparatus, or device, or any combination thereof. More specific examples of computer-readable storage media may include, but are not limited to, an electrical connection having one or more wires, a portable computer diskette, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the foregoing. In the disclosure, a computer-readable storage medium may be any tangible medium containing or storing a program that may be used by or in connection with an instruction execution system, apparatus, or device. In the disclosure, the computer readable signal medium may include a data signal propagated in baseband or as part of a carrier, wherein the computer-readable program code is carried. Such propagated data signal may take a variety of forms including, but not limited to, an electromagnetic signal, an optical signal, or any suitable combination of the foregoing. The computer-readable signal medium may also be any computer readable medium other than a computer readable storage medium that may send, propagate, or transmit a program for use by or in connection with an instruction execution system, apparatus, or device. The program code included on the computer-readable medium may be transmitted with any suitable medium, including, but not limited to: a wire, an optical cable, RF (radio frequency), and the like, or any suitable combination of the foregoing.

The computer-readable medium described above may be included in the electronic device; or may be separately present without being assembled into the electronic device.

The computer-readable medium carries one or more programs, and when the one or more programs are executed by the electronic device, the electronic device is enabled to perform the method shown in the foregoing embodiments.

Computer program code for performing operations of the disclosure may be written in one or more programming languages, including object oriented programming languages, such as Java, Smalltalk, C++, and conventional procedural programming languages, such as "C" language or similar programming languages. The program code may execute entirely on a user computer, partially on a user computer, as a stand-alone software package, partially on a user computer, partially on a remote computer, or entirely on a remote computer or a server. In the case of a remote computer, the remote computer may be connected to the user computer through any kind of network, including a local area network (LAN) or a wide area network (WAN), or may be connected to an external computer (for example, using an Internet service provider for Internet connection).

The flowcharts and block diagrams in the figures illustrate architecture, functionality, and operation of possible implementations of systems, methods, and computer program products according to various embodiments of the disclosure. In this regard, each block in the flowchart(s) or block diagram(s) may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagram(s) and / or flowchart(s), as well as combinations of blocks in the block diagram(s) and / or flowchart(s), may be implemented with a dedicated hardware-based system that performs the specified functions or operations, or may be implemented in a combination of dedicated hardware and computer instructions.

The units involved in the embodiments of the disclosure may be implemented in software, or may be implemented in hardware. The name of a unit does not necessarily constitute a limitation on the unit itself in certain circumstances. For example, a first obtaining unit may be further described as "obtaining at least two units of Internet Protocol addresses".

The functions described above may be performed, at least in part, by one or more hardware logic components. For example, without limitation, exemplary types of hardware logic components that may be used include: field programmable gate arrays (FPGAs), application specific integrated circuits (ASICs), application specific standard products (ASSPs), system-on-a-chip (SOCs), complex programmable logic devices (CPLDs), and the like.

In the context of the disclosure, the machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses, or devices, or any suitable combination of the foregoing. More specific examples of the machine-readable storage medium may include an electrical connection based on one or more lines, a portable computer disk, a hard disk, a random access memory (RAM), a read-only memory (ROM), an erasable programmable read-only memory (EPROM or a flash memory), an optical fiber, a portable compact disc read-only memory (CD-ROM), an optical storage device, a magnetic storage device, or any suitable combination of the foregoing.

In a first aspect, a video exporting method is provided according to one or more embodiments of the disclosure. The method includes: exporting a video editing draft according to a historical export parameter to generate a first video in response to an instruction for jumping to an export interface of the video editing draft; obtaining a current export parameter in the export page in response to a trigger instruction for an export control in the export interface; and using the first video as a target video exported from the video editing draft if a target export parameter in the current export parameter being consistent with a target export parameter in the historical export parameter.

According to one or more embodiments of the disclosure, using the first video as the target video exported from the video editing draft includes: continuing running of an export process of the first video and displaying export progress information if the export process of the first video is in progress, until the running of the export process of the first video is ended, and using the first video as the target video exported from the video editing draft; or directly displaying prompt information indicating a completion of export if running of the export process of the first video is ended, and using the first video as the target video exported by the video editing draft.

According to one or more embodiments of the disclosure, displaying the export progress information includes: obtaining progress information of the export process of the first video; and displaying an export progress display interface, and displaying the progress information of the export process of the first video in the export progress display interface.

According to one or more embodiments of the disclosure, exporting the video editing draft according to the historical export parameter includes: creating a target folder in a corresponding storage space according to a historical export path in the historical export parameter, and exporting the video editing draft into the target folder according to the historical export parameter; correspondingly, using the first video as the target video exported from the video editing draft includes: moving the first video from the target folder to a current export path in the current export parameter, and determining the first video as the target video exported from the video editing draft.

According to one or more embodiments of the disclosure, the method further includes: re-exporting the video editing draft according to the current export parameter in accordance with a determination that the target export parameter in the current export parameter is inconsistent with the target export parameter in the historical export parameter.

According to one or more embodiments of the disclosure, after obtaining the current export parameter in the export page, the method further includes: directly re-exporting the video editing draft according to the current export parameter in response to detecting that the export process of the first video fails or the first video is deleted.

According to one or more embodiments of the disclosure, after obtaining the current export parameter in the export page, the method further includes: directly re-exporting the video editing draft according to the current export parameter in response to detecting that a current export path in the current export parameter and a path where the first video is located are not in one disk partition.

According to one or more embodiments of the disclosure, after the exporting the video editing draft and before receiving the trigger instruction for the export control in the export interface, the method further includes: stopping an export process of the first video in response to detecting that any target export parameter in the export interface is modified, and re-exporting the video editing draft according to the historical export parameter and the modified target export parameter.

According to one or more embodiments of the disclosure, exporting the video editing draft according to the historical export parameter further includes: determining whether a predetermined export start condition is currently satisfied according to a predetermined detection strategy; and exporting the video editing draft according to the historical export parameter in accordance with a determination that a predetermined export start condition is currently satisfied.

According to one or more embodiments of the disclosure, determining whether the predetermined export start condition is satisfied currently according to the predetermined detection strategy includes at least one of the following: detecting whether running of a target draft editing algorithm is ended; or detecting whether a processing capability of a current device satisfies a maximum load pressure of a pre-export process; or detecting whether a target path of a product of the pre-export process has an access permission; or detecting whether a storage space of the target path of the product of the pre-export process satisfies a cache for the product of the pre-export process; or detecting whether a material in the video editing draft is valid; detecting whether a member material is used in the video editing draft, and whether the current account is a member account.

According to one or more embodiments of the disclosure, detecting whether the processing capability of the current device satisfies the maximum load pressure of the pre-export process includes: obtaining maximum resolutions of respective tracks in the video editing draft, calculating a sum of the maximum resolutions of the respective tracks, and determining the sum of the maximum resolutions of the respective tracks as the maximum load pressure of the pre-export process; obtaining a predetermined load pressure threshold of the current device for the pre-export process; and comparing the maximum load pressure of the pre-export process with the predetermined load pressure threshold, determining that the processing capability of the current device fails to satisfy the maximum load pressure of the pre-export process if the maximum load pressure of the pre-export process exceeds the predetermined load pressure threshold.

In a second aspect, a video exporting device is provided according to one or more embodiments of the disclosure. The video exporting device includes: a pre-exporting unit, configured to export a video editing draft according to a historical export parameter to generate a first video in response to an instruction for jumping to an export interface of the video editing draft; a determining unit, configured to obtain a current export parameter in the export page in response to a trigger instruction for an export control in the export interface; and an exporting unit, configured to use the first video as a target video exported from the video editing draft if a target export parameter in the current export parameter is consistent with a target export parameter in the historical export parameter.

According to one or more embodiments of the disclosure, when the first video is used as the target video exported from the video editing draft, the exporting unit is configured to: continue running of an export process of the first video and display export progress information if the export process of the first video is in progress, until the running of the export process of the first video is ended, and use the first video as the target video exported from the video editing draft; or directly display prompt information indicating a completion of export if running of the export process of the first video is ended, and use the first video as the target video exported by the video editing draft.

According to one or more embodiments of the disclosure, when displaying the export progress information, the exporting unit is configured to: obtain progress information of the export process of the first video; and display an export progress display interface, and display the progress information of the export process of the first video in the export progress display interface.

According to one or more embodiments of the disclosure, when exporting the video editing draft according to the historical export parameter, the pre-exporting unit is configured to: create a target folder in a corresponding storage space according to a historical export path in the historical export parameter, and export the video editing draft into the target folder according to the historical export parameter; correspondingly, when the first video is used as the target video exported from the video editing draft, the reusing unit is configured to: move the first video from the target folder to a current export path in the current export parameter, and determine the first video as the target video exported from the video editing draft.

According to one or more embodiments of the disclosure, the exporting unit is further configured to: re-export the video editing draft according to the current export parameter in accordance with a determination that the target export parameter in the current export parameter is inconsistent with the target export parameter in the historical export parameter.

According to one or more embodiments of the disclosure, after obtaining the current export parameter in the export page, the exporting unit is further configured to: directly re-export the video editing draft according to the current export parameter in accordance with a determination that the export process of the first video fails or the first video is deleted.

According to one or more embodiments of the disclosure, after obtaining the current export parameter in the export page, the exporting unit is further configured to: directly re-export the video editing draft according to the current export parameter in accordance with a determination that a current export path in the current export parameter and a path where the first video is located are not in one disk partition.

According to one or more embodiments of the disclosure, after exporting the video editing draft, and before receiving the trigger instruction for the export control in the export interface, the exporting unit is further configured to: stop an export process of the first video in accordance with a determination that any target export parameter in the export interface is modified, and re-export the video editing draft according to the historical export parameter and the modified target export parameter.

According to one or more embodiments of the disclosure, when exporting the video editing draft according to the historical export parameter, the pre-exporting unit is configured to: determine whether a predetermined export start condition is satisfied currently according to a predetermined detection strategy; and export the video editing draft according to the historical export parameter in accordance with a determination that a predetermined export start condition is currently satisfied.

According to one or more embodiments of the disclosure, when determining whether the predetermined export start condition is satisfied currently according to the predetermined detection strategy, the pre-exporting unit performs at least one of the following: detecting whether running of a target draft edit algorithm is ended; or detecting whether a processing capability of a current device satisfies a maximum load pressure of a pre-export process; or detecting whether a target path of a product of the pre-export process has an access permission; or detecting whether a storage space of the target path of the product of the pre-export process satisfies a cache for the product of the pre-export process; or detecting whether a material in the video editing draft is valid; detecting whether a member material is used in the video editing draft and whether a current account is a member account.

According to one or more embodiments of the disclosure, when detecting whether the processing capability of the current device satisfies the maximum load pressure of the pre-export process, the pre-exporting unit is configured to: obtain maximum resolutions of respective track in the video editing draft, calculate a sum of the maximum resolutions of the respective tracks, and determine the sum of the maximum resolutions of the respective tracks as the maximum load pressure of the pre-export process; obtain a predetermined load pressure threshold of the current device for the pre-export process; and compare the maximum load pressure of the pre-export process with the predetermined load pressure threshold, and determine that the processing capability of the current device fails to satisfy the maximum load pressure of the pre-export process if the maximum load pressure of the pre-export process exceeds the predetermined load pressure threshold.

In a third aspect, an electronic device is provided according to one or more embodiments of the disclosure. The electronic device includes: at least one processor and a memory; the memory storing computer-executable instructions; and the at least one processor executing the computer-executable instructions stored in the memory, causing the at least one processor to perform the video exporting method according to the first aspect and various possible designs of the first aspect.

In a fourth aspect, according to one or more embodiments of the disclosure, there is provided a computer-readable storage medium having stored thereon computer-executable instructions that, when executed by a processor, implement the video exporting method according to the first aspect and various possible designs of the first aspect.

In a fifth aspect, according to one or more embodiments of the disclosure, there is provided a computer program product, including computer-executable instructions that, when executed by a processor, implements the video exporting method according to the first aspect and various possible designs of the first aspect.

The above description is merely an illustration of the preferred embodiments of the disclosure and the principles of the applied technology. It should be understood by those skilled in the art that the disclosure scope involved in the disclosure is not limited to the technical solutions of the specific combination of the above technical features, and should also cover other technical solutions formed by any combination of the above technical features or their equivalent features without departing from the above disclosed concept, for example, technical solutions formed by mutually substituting the above features with technical features having similar functions disclosed in the disclosure (but not limited thereto).

Further, while operations are depicted in a particular order, this should not be understood to require that these operations be performed in the particular order shown or in sequential order. In certain circumstances, multitasking and parallel processing may be advantageous. Likewise, while several specific implementation details are included in the discussion above, these should not be construed as limiting the scope of the disclosure. Certain features described in the context of separate embodiments may also be implemented in combination in a single embodiment. Conversely, various features described in the context of a single embodiment may also be implemented in multiple embodiments either individually or in any suitable sub-combination.

Although the present subject matter has been described in language specific to structural features and / or methodological acts, it is to be understood that the subject matter defined in the appended claims is not necessarily limited to the specific features or acts described above. Rather, the specific features and acts described above are merely exemplary forms of implementing the claims.

## Claims

1. A video exporting method comprising:
exporting a video editing draft according to a historical export parameter to generate a first video in response to an instruction for jumping to an export interface of the video editing draft;
obtaining a current export parameter in the export page in response to a trigger instruction for an export control in the export interface;
using the first video as a target video exported from the video editing draft if a target export parameter in the current export parameter is consistent with a target export parameter in the historical export parameter.

2. The method of claim 1, wherein using the first video as the target video exported from the video editing draft comprises:
continuing running of an export process of the first video and displaying export progress information if the export process of the first video is in progress, until the running of the export process of the first video is ended, and using the first video as the target video exported from the video editing draft; or
directly displaying prompt information indicating a completion of export if running of the export process of the first video is ended, and using the first video as the target video exported by the video editing draft.

3. The method of claim 2, wherein displaying the export progress information comprises:
obtaining progress information of the export process of the first video;
displaying an export progress display interface, and displaying the progress information of the export process of the first video in the export progress display interface.

4. The method of any of claims 1-3, wherein exporting the video editing draft according to the historical export parameter comprises:
creating a target folder in a corresponding storage space according to a historical export path in the historical export parameter, and exporting the video editing draft into the target folder according to the historical export parameter; and
correspondingly, using the first video as the target video exported from the video editing draft comprises:
moving the first video from the target folder to a current export path in the current export parameter and determining the first video as the target video exported from the video editing draft.

5. The method of any of claims 1-3, further comprising:
re-exporting the video editing draft according to the current export parameter in accordance with a determination that the target export parameter in the current export parameter is inconsistent with the target export parameter in the historical export parameter.

6. The method of any of claims 1-3, wherein the method further comprises: after obtaining the current export parameter in the export page,
directly re-exporting the video editing draft according to the current export parameter in response to detecting that the export process of the first video fails or the first video is deleted.

7. The method of any of claims 1-3, wherein the method further comprises: after obtaining the current export parameter in the export page,
directly re-exporting the video editing draft according to the current export parameter in response to detecting that a current export path in the current export parameter and a path where the first video is located are not in one disk partition.

8. The method of any of claims 1-3, wherein the method further comprises: after exporting the video editing draft, and before receiving the trigger instruction for the export control in the export interface,
stopping an export process of the first video in response to detecting that any target export parameter in the export interface is modified, and re-exporting the video editing draft according to the historical export parameter and the modified target export parameter.

9. The method of any of claims 1-3, wherein exporting the video editing draft according to the historical export parameter further comprises:
determining whether a predetermined export start condition is satisfied currently according to a predetermined detection strategy;
exporting the video editing draft according to the historical export parameter in accordance with a determination that a predetermined export start condition is currently satisfied.

10. The method of claim 9, wherein determining whether the predetermined export start condition is satisfied currently according to the predetermined detection strategy comprises at least one of:
detecting whether running of a target draft editing algorithm is ended; or
detecting whether a processing capability of a current device satisfies a maximum load pressure of a pre-export process; or
detecting whether a target path of a product of the pre-export process has an access permission; or
detecting whether a storage space of the target path of the product of the pre-export process sastifies a cache for the product of the pre-export process; or
detecting whether a material in the video editing draft is valid;
detecting whether a member material is used in the video editing draft and whether a current account is a member account.

11. The method of claim 10, wherein detecting whether the processing capability of the current device satisfies the maximum load pressure of the pre-export process comprises:
obtaining maximum resolutions of respective tracks in the video editing draft, calculating a sum of the maximum resolutions of the respective tracks, and determining the sum of the maximum resolutions of the respective tracks as the maximum load pressure of the pre-export process;
obtaining a predetermined load pressure threshold of the current device for the pre-export process;
comparing the maximum load pressure of the pre-export process with the predetermined load pressure threshold, determining that the processing capability of the current device fails to satisfy the maximum load pressure of the pre-export process if the maximum load pressure of the pre-export process exceeds the predetermined load pressure threshold.

12. A video exporting device, comprising:
a pre-exporting unit, configured to export a video editing draft according to a historical export parameter to generate a first video in response to an instruction for jumping to an export interface of the video editing draft;
a determining unit, configured to obtain a current export parameter in the export page in response to a trigger instruction for an export control in the export interface;
a reusing unit, configured to use the first video as a target video exported from the video editing draft if a target export parameter in the current export parameter is consistent with a target export parameter in the historical export parameter.

13. An electronic device, comprising: at least one processor and a memory;
the memory storing computer-executable instructions;
the at least one processor executing the computer-executable instructions stored in the memory, causing the at least one processor to perform the method of any of claims 1-11.

14. A computer-readable storage medium having stored thereon computer-executable instructions that, when executed by a processor, implement the method of any of claims 1-11.

15. A computer program product comprising computer-executable instructions that, when executed by a processor, implement the method of any of claims 1-11.
